(19)

Europäisches Patentamt

European Patent Office

Office européen des brevets

(11) **EP 4 488 888 A1**

(12) **EUROPEAN PATENT APPLICATION**

(43) Date of publication:
**08.01.2025 Bulletin 2025/02**

(21) Application number: **23184242.8**

(22) Date of filing: **07.07.2023**

(51) International Patent Classification (IPC):
**G06N 10/60** (2022.01)    **G06N 3/045** (2023.01)
**G06N 3/084** (2023.01)    **G06N 3/092** (2023.01)
**G06N 3/006** (2023.01)

(52) Cooperative Patent Classification (CPC):
**G06N 10/60; G06N 3/045; G06N 3/084;
G06N 3/092;** G06N 3/006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Terra Quantum AG
9000 St. Gallen (CH)**

(72) Inventors:
• **Haboury, Nathan
9000 St. Gallen (CH)**
• **Kordzanganeh, Mohammad
9000 St. Gallen (CH)**

• **Joshi, Ayush
9000 St. Gallen (CH)**
• **Tokarev, Igor
9000 St. Gallen (CH)**
• **Abdallah, Lukas
9000 St. Gallen (CH)**
• **Kurkin, Andrii
9000 St. Gallen (CH)**
• **Kyriacou, Basil
9000 St. Gallen (CH)**
• **Melnikov, Alexey
9000 St. Gallen (CH)**

(74) Representative: **Kretschmann, Dennis
Boehmert & Boehmert
Anwaltspartnerschaft mbB
Pettenkoferstraße 22
80336 München (DE)**

(54) **A SYSTEM AND METHOD FOR SELECTING AN OPTIMAL ACTION WITH A QUANTUM COMPUTER**

(57)    A quantum computation system for determining an optimal action in a multi-step decision problem based on a current state, comprising first computation qubits, second computation qubits, a first and a second variational quantum circuit comprising a plurality of quantum gates acting on the first computation qubits and on the second computation qubits, respectively, wherein the plurality of quantum gates each comprise variational quantum gates and encoding gates for modifying a state of the computation qubits; wherein the encoding gates are configured to encode the first and second input feature vector in the first and second computation qubits, respectively; and wherein the quantum gates of the second variational quantum circuit do not act on the first computation qubits; a coherent interaction quantum circuit for entangling the quantum states of the first and second computation qubits; and a measurement portion for determining an output feature vector indicative of the optimal action.

Fig. 3

**Description**

FIELD OF THE INVENTION

The present invention is in the field of quantum computing. More precisely, the present invention relates to the use of quantum computing for predicting an optimal action for an agent faced with a multi-step decision problem.

BACKGROUND

Natural disasters like earthquakes can result in devastating effects, including loss of life and property damage. Emergency evacuation procedures are critical in such scenarios, and optimizing these procedures is essential for saving lives. One of the most common modes of transportation during emergency evacuations is cars, and it is important to ensure that the routes taken by these vehicles are safe and efficient.

Although reliable algorithms exist for navigating a graph of nodes encoding a map, the task of finding an optimal path becomes difficult even for state-of-the-art algorithms when dynamically changing conditions are introduced. Specifically, in the case of a natural disaster, traffic may not only be locally affected, e.g. through blocked roads and local traffic jams, but efficient routing may also be impacted through the development of traffic congestion as part of ongoing evacuation efforts.

Quantum computers provide a platform of controllable quantum mechanical systems whose state and interaction can be controlled in order to perform a computation. The computation is realized by a deterministic evolution of the controllable quantum mechanical systems, e.g. qubits as quantum analogues of classical bits, and the state of the quantum mechanical systems can be measured to determine the outcome of the computation.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

However, the superposition/entangled states of quantum mechanical systems are inherently volatile (e.g. suffer from decoherence) and the control and measurement of these systems is subject to fidelity margins, such that state-of-the-art quantum computers are currently limited both in the number of controllable quantum mechanical systems (qubits) as well as the number of successively performed control actions (quantum gates).

Despite these shortcomings, promising applications for near term available quantum processors exist, i.e. noisy intermediate-scale quantum (NISQ) devices, such as variational quantum algorithms. In variational quantum algorithms, the action of the quantum gates is parametrized in terms of variational parameters, and the variational parameters may be systematically varied with the help of a classical computing resource, in a manner analogous to machine learning. By varying the variational parameters to extremize a cost function, which attributes a cost to the output of the variational quantum circuit with respect to an optimal solution, an output of the variational quantum circuit can be "trained" to provide an optimal solution to an unseen problem. Entanglement between different qubits may give access to a large internal state space to provide "quantum advantage".

Giacomo Nannicini and Leo Liberti. ("Shortest paths on dynamic graphs. International Transactions in Operational Research", 15(5):551-563, 2008) discloses common algorithms for determining optimal paths through a graph of nodes and edges.

SUMMARY OF THE INVENTION

Traditional optimization methods rely on classical algorithms, which may not be able to handle the complexity of large-scale problems such as the optimization of emergency evacuation plans. Moreover, these algorithms generally rely on having full knowledge about the entire problem landscape as well as the dynamics to make an accurate prediction.

In view of this state-of-the-art, the object of the invention is to provide an improved system for predicting an optimal action when faced with a complex multi-step decision problem, in particular based on a (local) subset of information on the problem.

This object is solved by methods and a system according to the independent claims. The dependent claims relate to preferred embodiments.

According to a first aspect, the invention relates to a quantum computation system for determining an optimal action in a multi-step decision problem based on a current state. The quantum computation system comprises a first qubit register comprising first computation qubits, a second qubit register comprising second computation qubits, a first variational quantum circuit comprising a plurality of quantum gates acting on the first computation qubits, and a second variational quantum circuit comprising a plurality of quantum gates acting on the second computation qubits. The plurality of quantum gates of the first variational quantum circuit and of the second variational quantum circuit each comprise variational quantum gates and encoding gates for modifying a state of the first computation qubits and the second computation qubits, respectively, and parametrized actions of the variational quantum gates on the qubits of the qubit register are parametrized according to associated variational parameters. The encoding gates are configured to encode the first input feature vector and the second input feature vector in the quantum states of the first computation qubits and the second computation qubits, respectively, and the quantum gates of the second variational quantum circuit do not act on the first computation qubits. The system further comprises a coherent interaction quantum circuit, wherein the coherent interaction quantum circuit comprises a plurality of multi-qubit gates for entangling the quantum states of the first computation qubits and the second computation qubits acted on by the first variational quantum circuit and the second variational quantum circuit, respectively, and a measurement portion for determining an output feature vector indicative of the optimal action by measuring a quantum state of one or both of the first computation qubits and the second computation qubits.

Contrary to current approaches for variational quantum circuits, the first and second variational quantum circuits may independently act on different sets of qubits, such as to individually process the first and second computation qubits based on respective variational parameters. The quantum gates of the second variational quantum circuit do not act on the first computation qubits, and the quantum gates of the first variational quantum circuit may not act on the second computation qubits. The coherent interaction circuit may subsequently entangle the states of the first and second computation qubits and a resulting entangled quantum state may be processed and measured for determining and optimal action. The separation of the first and second variational quantum circuits may allow the efficient training and processing of information related to the local information as well as global information, wherein the first and second input feature vectors are preferably used to encode different dynamics of a multi-step decision problem. For example, the first input feature vector may encode local information into the first computation qubits, while the second input feature vector may encode global information in to the second computation qubits.

In preferred embodiments, the first input feature vector is based on the current state, and the second input feature vector is based on scenario information valid for a plurality of different states for the multi-step decision problem.

The current state may encode local information and may be valid only for a given step of a multi-step decision problem, such as valid for one node of a graph of interconnected nodes. The scenario information may encode information which affects several states of the multi-step decision problem, in particular multiple nodes of a graph of interconnected nodes underlying the multi-step decision problem and/or which may be valid for multiple steps of the multi-step decision problem. For example, the scenario information may encode information pertaining to a perturbation to the multi-step decision problem, such as the underlying cause and/or origin of a perturbation, e.g. the spatial origin of an earthquake, a reported location of a terrorist attack or similar spatial information.

The information in the first and the second input feature vectors may be encoded in the variational quantum circuits based on a data reuploading circuit, wherein the first and the second variational quantum circuits may each comprise layers of variational quantum gates and layers of encoding gates, which may be applied to the respective computation qubits in alternating fashion.

The information in the first input feature vector and/or the second input feature vector may be encoded over multiple layers of encoding gates, wherein pairs of encoding gates may be separated by a layer of variational quantum gates, and the encoding of values of the input feature vectors may be repeated in different layers of the encoding gates. The repetition of encoding the values of the input feature vectors over multiple layers of the encoding gates may mimic a data-reuploading, which may increase an order of an internal fitting function for an assumed mechanism by the quantum computation system. Additionally, or alternatively the values of a large input feature vector may be separated into input feature sub-vectors which may be encoded over multiple layers of encoding gates, wherein a layer of encoding gates may encode one of the input feature sub-vectors.

In preferred embodiments, the scenario information is constant or a smooth function over a sequence of steps of the multi-step decision problem.

For example, the scenario information may provide spatial information related to the perturbation, e.g. the origin of a traffic perturbation, and may include amplitude information regarding the perturbation, such as the strength of an earthquake, the severity of the damage, and/or the size of the affected area.

In some embodiments, the first variational quantum circuit may process the first computation qubits based on local information encoded in the current state, and the second variational quantum circuit may independently process the scenario information encoded in the second computation qubits. The resulting quantum states may be entangled, such that a measurement of a resulting state may retrieve an optimal action based on the current state in view of a perturbation encoded in the scenario information. The separation of the first and second variational quantum circuit may enable the variational quantum circuit to effectively generalize the scenario information and facilitate convergence of the training algorithm.

In preferred embodiments, the multi-step decision problem is defined on a graph of interconnected nodes, wherein the multi-step decision problem is based on a selection of a next node based on a current node.

The multi-step decision problem may be a navigation towards a target destination node based on a node-by-node advance of the current state. The current state may be based on the current node and may be based on adjacent edge information and/or properties of neighboring nodes. Further, the current state may include context information for the current state, which can be associated with a real-world property, which may not be represented in the graph of interconnected nodes. For example, the context information may include spatial coordinates of an agent and/or task context, such as starting node and end node coordinates of a navigation task.

In preferred embodiments, the current state includes information on the current node, and wherein the scenario information is independent of the current node.

The current state may encode local information for the current node, such as neighboring nodes, edge weights, centrality information, and spatial information on the current location, the start location, and a target location. The scenario information may be the location of the earthquake.

In preferred embodiments, the current state and/or the scenario information changes based on an elapsed time and/or a number of steps taken to solve the multi-step decision problem.

For example, the current state may be based on dynamic information, such as dynamically updated edge weights based on elapsed time and/or number of steps taken. In some embodiments, the dynamic information promoting a change of the current state based on the elapsed time and/or the number of steps taken affect multiple nodes, which could underly the current state as a current node. In some embodiments, an elapsed time since the beginning of a perturbation is part of the input data. The system may be trained to account for dynamic information based on a training set of optimal routes in a dynamically varying problem environment. For example, a development of conditions of a multi-step decision problem, such as the edge weights of a graph in a navigation problem on a graph, may be updated in accordance with a simulation of the perturbation.

In preferred embodiments, the multi-step decision problem is a navigation problem, and the optimal action indicates an optimal direction of travel on a map featuring intersections interconnected by edges.

For an earthquake evacuation scenario, the edge weights close to the earthquake epicenter and close to potential exits in which traffic naturally converges may increase (e.g. based on the development of traffic congestion as part of an ongoing evacuation dynamic), and a corresponding dynamic graph may be simulated. For training purposes, a plurality of dynamic evacuation scenarios may be simulated, e.g. based on different starting nodes, earthquake epicenters, and exit conditions for generating a training set. The system may be subsequently trained on the plurality of evacuation scenarios. For example, a modified navigation algorithm may be tasked with node-wise navigation, wherein the graph information (e.g. edge weights) may be updated after every step decided on by the navigation algorithm based on a simulation of the earthquake by a simulation algorithm. The system may subsequently be trained to select an optimal node based on the current state of the multi-step decision problem for evacuating in a dynamic scenario, wherein the classical heuristic routing algorithm may act as a supervisor in a supervised learning scheme.

In preferred embodiments, the scenario information encodes information on a traffic perturbation, in particular on a spatial origin of the traffic perturbation, and wherein the multi-step decision problem relates to evacuation routing in view of the traffic perturbation.

The scenario information may encode earthquake epicenter coordinates and/or earthquake strength, which may modify an optimal action taken by an agent in a dynamically changing evacuation scenario. The scenario information may be smaller than the current state related information, and the number of second computation qubits may accordingly be smaller than the number of first computation qubits.

In preferred embodiments, the quantum computation system comprises a first number of first computation qubits and a second number of second computation qubits, wherein the first number and the second number are different.

For example, the second number may be smaller than the first number.

The coherent interaction circuit can entangle the quantum states of the first computation qubits such as to increase the quantum state space available for any further computation of the first computation qubits based on the action of the second variational quantum circuit on the second computation qubits.

In preferred embodiments, the system further comprises a third variational quantum circuit, wherein the third variational quantum circuit acts on an output quantum state of the coherent interaction quantum circuit.

The third variational quantum circuit may process the entangled state of the first computation qubits and the second computation qubits to generate an output state for determining the optimal action. The third variational quantum circuit may act on all or part of the first computation qubits and the second computation qubits. In some embodiments, a number of qubits on which the quantum gates of the third variational quantum circuit act is smaller than the sum of the first number and the second number. When the third variational quantum circuit acts on a subset of the first and second computation qubits, a condensation of the information of the quantum states produced by the first and second variational quantum circuits may be promoted, which may improve a convergence of the variational quantum circuit towards an optimal combination of variational parameters for the task of attributing an optimal label to the input provided as the first input feature vector and the second input feature vector to the different sets of computation qubits.

In preferred embodiments, the variational parameters are trained based on a training algorithm to predict a selected action of a multi-step decision making algorithm based on the current state, wherein the variational parameters in particular are trained based on a navigation algorithm for navigating a graph of nodes, wherein the optimal action is based on a predicted next node for optimally navigating the graph of nodes.

The first input feature vector may encode information pertaining to the current state, such as the current node, which corresponds to the current state of the agent. The second input feature vector may encode perturbation information indicative of an edge weight variation for multiple nodes of the graph of nodes. The optimal action may be a label indicating the predicted next node for navigating to a target (destination) node, wherein the target node may be indicated in the first input feature vector or the second input feature vector.

In preferred embodiments, the current state comprises neighboring node information for each neighboring node. The neighboring node information comprises one or more information fields selected from the group of: current node coordinates, destination node coordinates, start node coordinates, edge weight information indicative of a travelling time between the current node and the neighboring node, distance information with respect to an Euclidean distance between the neighboring node and the current node, edge centrality information on the neighboring node, and cosine norm information based on coordinates of the current node, the neighboring node and a destination node.

The current node coordinates may encode a spatial location of a node on a map, which may be abstracted by the graph of nodes. The destination node coordinates may encode a spatial location of each neighboring node on the map, and the start and end node coordinates may encode a spatial location of the starting location and the target navigation goal, respectively. The edge weight information may be provided for each neighboring node, such as to indicate travelling time to each node option of the neighboring nodes, and edge centrality information may encode a number of edges connected to each of the neighboring nodes. The cosine norm information may indicate directional information related to the question whether a change from the current node to one of the neighboring nodes pertains to a movement towards a target navigation goal, away from the target navigation goal or tangentially with respect to the target navigation goal. For example, the directional information may be based on an angle between and/or a scalar product of vectors between the current node and the neighboring node and a vector between the current node and the end node associated with the target navigation goal. Specifically, the cosine distance may be defined as

$$\cos(\theta) = \frac{\boldsymbol{A} \cdot \boldsymbol{B}}{\|\boldsymbol{A}\|\|\boldsymbol{B}\|}$$

wherein, for a node $p$, and exit "*exit*" and a neighbor node $q$, A and B can be defined as $A = (q_x - p_x, q_y - p_y)$, and $B = (exit_x - p_x, exit_y - p_y)$.

The Euclidean distance information may be based on the separation distance between the current node and the neighboring node.

The information on the neighboring nodes may further comprise betweenness centrality information. Betweenness centrality is a measure of centrality in a graph based on the shortest paths, it describes, for each node the number of these shortest paths that pass through the edges. Nodes with a high betweenness centrality are positioned strategically along the shortest paths between other nodes, meaning they have a significant impact on the graph's connectivity.

In the training data, the information on the neighboring nodes may be enhanced, e.g. by switching an order of the neighboring nodes in the respective input feature vector, such as to promote a corresponding symmetry with respect to the handling of the information on multiple neighboring nodes to the variational quantum circuit.

According to a second aspect, the invention relates to a hybrid quantum computation system comprising the quantum computation system according to the first aspect. The system further comprises a first machine learning model implemented on classical hardware, wherein the first machine learning model is configured to process the first input feature vector and/or the second input feature vector to obtain an output feature vector. The hybrid quantum computation system further comprises a combination module, wherein the combination module is configured to combine the output feature vector of the first machine learning model and an output feature vector of the measurement portion and to determine an output state indicative of the optimal action based on combination parameters. The variational parameters, the machine-learning parameters, and the combination parameters are obtained based on a common training algorithm, wherein the variational parameter, the machine-learning parameters, and the combination parameters are jointly updated in an iterative manner to improve a prediction of the optimal action.

The inventors found that a combination of a classical machine learning model, which can implemented on classical hardware, and which may process the input feature vectors based on binary values of zeroes and ones, with a quantum computation system according to the first aspect may improve a labelling of the input feature vectors with respect to the trained task, wherein the quantum variational circuit arrangement may fit global aspects of an optimal selection of the optimal action, and wherein the first machine learning model may be sensitive to deviations from the global aspect of the optimal selection as part of optimally solving the multi-step decision problem. The joint solving of the multi-step decision problem may rely on the joint training of the first machine learning model and the quantum computation system, wherein the individual outputs of the quantum computation system and the machine learning model may not be indicative of the optimal action on their own, but a trained combination of their respective output feature vectors may draw from intermediate results for predicting the optimal action. The combination of the output feature vectors may be a linear combination of the output feature vectors or may be a non-linear combination of the output feature vectors, e.g. based on a second machine learning model processing the concatenated output feature vectors of the quantum computation system and the first machine learning model.

In preferred embodiments, the combination module comprises a second machine learning module for combining the output feature vectors of the first machine learning model and the measurement portion of the quantum computation system.

The first machine learning model may mimic a structure of the quantum computation system based on a provision of a first and a second sub-model for individually processing the first and the second feature vector, respectively, before an output of the first sub-model and the second sub-model may be combined for obtaining the output feature vector of the first machine learning model.

In preferred embodiments, the first machine learning model comprises a first sub-model and a second sub-model for processing the first feature vector and the second feature vector, respectively, and further comprises a feature-wise modulation layer, wherein the feature-wise modulation layer acts on an output of the first sub-model and wherein weights and/or biases of the feature-wise modulation layer are modulated based on an output of the second sub-model.

The output of the first sub-model and the second sub-model may be combined using a third sub-model, e.g. an artificial neural network receiving the combined output of the first sub-model and the second sub-model, e.g. the output of the feature-wise modulation layer, which may be a layer of artificial neurons.

In preferred embodiments, wherein the machine learning model further comprises a third sub-model configured to process an output of the feature-wise modulation layer.

In preferred embodiments, the system is obtained based on a training with training hyperparameters selected to promote a balanced contribution of the first machine learning model and the quantum computation system to the optimal action, in particular based on a training with different learning rates for updating the parameters of the machine learning model and for updating the variational parameters of the quantum computation system.

For example, a learning rate of the variational parameters may be larger, or in some embodiments smaller, than a learning rate for updating the parameters, e.g. weights and biases, of the first machine learning model.

The system according to the second aspect may also benefit from any feature of the preferred embodiments of the first aspect.

According to a third aspect, the invention relates to a navigating system comprising the system according to the first or second aspect.

The system according to the second aspect may also benefit from any feature of the preferred embodiments of the first aspect or the second aspect.

According to a fourth aspect, the invention relates to a method for training a system according to a system according to any one of the first, second, or third aspects for predicting an optimal action in a multi-step decision problem based on a current state, wherein conditions of the multi-step decision problem evolve over time. The method comprises determining scenario information and current state information for the multi-step decision problem, and iteratively determining a candidate solution for the multi-step decision problem by predicting an optimal step based on a supervisor algorithm, obtaining a prediction for the optimal step by the system; and updating the current state and the conditions of the multi-step decision problem. The method further comprises updating the variational parameters of the quantum computation system based on an optimization algorithm, such that the prediction of the optimal step predicted by the system approaches the optimal step predicted by the supervisor algorithm.

In some embodiments, the method further comprises selecting another multi-step decision problem with associated scenario information.

In preferred embodiments, the supervisor algorithm determines the optimal step based on a complete solution of the multi-step problem starting from the current state.

The supervisor algorithm may calculate an optimal sequence of steps for solving the multi-step decision problem and may predict the next optimal action based on the optimal sequence. The current state may then be updated based on the next optimal action, and the conditions may be updated after the next optimal action is executed. The algorithm may then continue determining a next optimal sequence of steps for solving the multi-step decision problem.

In preferred embodiments, the conditions are fixed for determining the complete solution.

The conditions may be updated after taking the predicted optimal action, and the conditions may only be updated from an updated current state. The sequence of optimal actions may be recorded for determining a training set of data, and the quantum computation system and/or the hybrid quantum computation system may be trained based on the training set of data. For example, for each step of a solution of the multi-step decision problem by the supervisor algorithm, the current state information may be recorded, and the quantum computation system and/or the hybrid quantum computation system may be trained to predict the predicted optimal step based on the current state.

According to a fifth aspect, the invention relates to a non-transitory medium comprising machine-readable instruction, which, when executed by a processing system, cause the processing system to implement a system according to any one of the first, second, or third aspects and/or to implement a method according to the fourth aspect.

Although the invention has been described primarily with respect to an example in the field of navigation problems in view of a perturbation, the quantum computation system and/or the hybrid quantum computation system may be used to solve other multi-step decision problems, such as control problems for robotics and/or maze problems. Further, the structure of the quantum computation system and/or the hybrid quantum computation system may also be used for determining an optimal label based on a first input feature vector and a second feature vector for problems based on different information types, such as query driven image analysis, wherein the first input feature vector may be based on an ordered sequence of features and the second input feature vector may be based on a two-dimensional map of features, or vice-versa.

The system according to the first aspect, the second aspect and/or the third aspect may be controlled using a processing system, which may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The quantum computation system may be implemented in quantum hardware, wherein a control system may determine control signals for controlling the quantum hardware based on the specifics of the quantum computation system, e.g. by initializing qubits, performing gate rotations and applying multi-qubit gates to several qubits implemented in the quantum hardware. The machine learning models may be implemented as neural networks in classical hardware, e.g. a processing system such as a computer or specialized classical hardware for implementing neural networks.

DETAILED DESCRIPTION OF EMBODIMENTS

The features and numerous advantages of the methods and system according to the present invention will best be understood from a detailed description of preferred embodiments with reference to the accompanying drawings, in which:

Fig. 1    schematically illustrates a map abstracted based on a graph of nodes interconnected by edges according to an example;

Fig. 2    illustrates an example of a quantum computation system for determining an optimal action based on a current state of a multi-step decision problem;

Fig. 3    schematically illustrates another example of a quantum computation system;

Fig. 4    illustrates an example of a hybrid quantum-classical computation system, which combines the quantum computation system illustrated in Fig. 3 and a machine learning model;

Fig. 5    illustrates an example of a flowchart for a method of generating a training dataset for the systems of Figs. 1-4; and

Fig. 6    illustrates an example of a method for training a hybrid quantum-classical computation system as illustrated in Fig. 4.

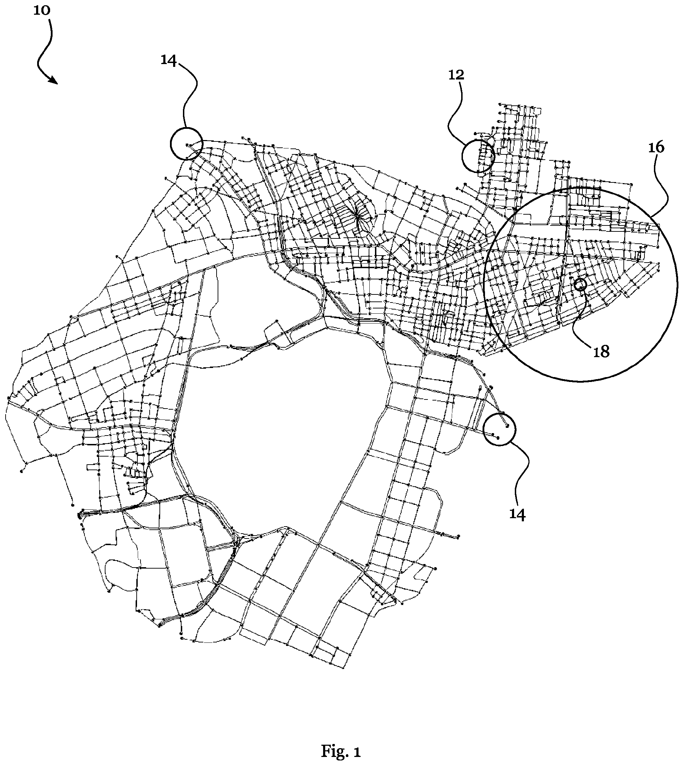

Fig. 1 schematically illustrates a map 10 abstracted based on a graph of nodes interconnected by edges according to an example. The edges of the graph may correspond to streets of the map 10 and the nodes may correspond to intersections of a street system. In the map 10, a starting position 12 is indicated with a hollow circle, wherein the starting position 12 may correspond to a starting state, e.g. associated with an edge or a node. It is noted that an edge may be decomposed into a node and two edges, such that a starting position 12 on an edge may be converted to a starting node, and vice-versa. A navigation system may be tasked to find a path through the graph of nodes and edges towards an exit 14, e.g. selected from a plurality of potential exits 14 as indicated in the example map 10. For a corresponding navigation problem, a plurality of algorithms are known for determining an optimal path, which may indicate an optimal sequence of nodes and/or edges for traversing from a starting position 12 to a target destination, e.g. one of the exits 14, such as the Dijkstra algorithm or the A* algorithm. The edges may be associated with edge weights, which may pertain to a travelling distance and/or travel time for traversing the edge towards the next node.

However, in the illustrated example, the navigation problem is perturbed by a traffic perturbation in the form of an earthquake 16, which may directly affect a given area of the map 10, as indicated by the associated solid hollow circle. The earthquake 16 may be associated with an earthquake epicenter 18, which may indicate an (estimated) spatial origin of the perturbation.

In such a case, traffic in an area around the earthquake epicenter 18 may be directly affected by the effects of the earthquake 16, e.g. based on blocked roads and local traffic jams. In addition, an ongoing evacuation may increase traffic along common evacuation routes, in particular close to the exits 14, which may dynamically develop following the occurrence of the earthquake 16, and which may negatively impact the discovery of optimal evacuation paths for a navigation system. Specifically, in such a dynamically changing environment, the determination of an optimal next edge based on the current position may have to be regularly reevaluated as part of a multi-step decision problem for optimal navigation on the graph of nodes and edges.

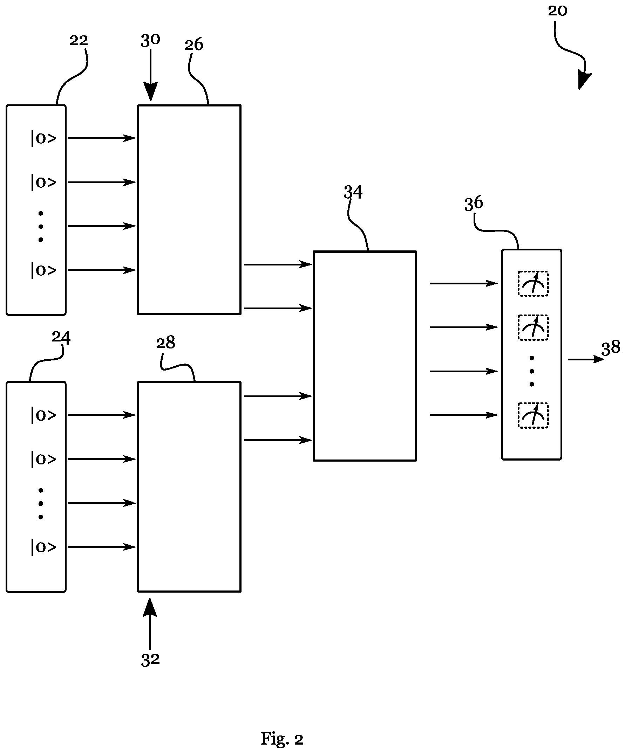

Fig. 2 illustrates an example of a quantum computation system 20 for determining an optimal action based on a current state of a multi-step decision problem. The system comprises a first qubit register 22 of first computation qubits and a second qubit register 24 of second computation qubits, which are processed by a first variational quantum circuit 26 and a second variational quantum circuit 28, respectively. The first variational quantum circuit 26 and the second variational quantum circuit 28 each comprise encoding gates for modifying a state of the first computation qubits and the second computation qubits, respectively, and further each comprise variational quantum gates, whose action on the qubits are parametrized by variational parameters.

The first variational quantum circuit 26 and the second variational quantum circuit 28 may each comprise a plurality of layers of variational quantum gates, wherein each layer of variational quantum gates may act on each qubit of the respective qubits and may comprise a multi-qubit gate for entangling the states of the respective qubits.

The encoding gates of the first variational quantum circuit 26 and the second variational quantum circuit 28 may encode a first input feature vector 30 and a second input feature vector 32 in the states of the first computation qubits and the second computation qubits, respectively.

The first input feature vector 30 may encode current state information based on the respective multi-step decision problem, such as information related to the current node, neighboring nodes and the location information on the map, e.g. the current position, the starting position 12 and/or location information of a selected or multiple exit(s) 14. The second input feature vector 32 may encode perturbation information, e.g. related to the earthquake 16, such as the location of the earthquake epicenter 18 and/or the severity of the earthquake 16.

After the first variational quantum circuit 26 and the second variational quantum circuit 28 have acted on the first computation qubits and the second computation qubits, a coherent interaction circuit 34 may entangle the resulting quantum states of the first computation qubits and the second computation qubits. The coherent interaction circuit 34 may for example comprise multi-qubit gates, which may prepare coherent superposition states of the first computation qubits and the second computation qubits and which may process the superposition states, e.g. according to further variational parameters.

The resulting quantum states of the first computation qubits and/or the second computation qubits may be measured in a measurement portion 36, e.g. based on projective measurements of the qubits by suitable qubit state detectors.

The resulting output feature vector 38, which maybe determined based on the measured states of the measurement portion 36 may be indicative of an optimal action, e.g. indicative of the next node selected from a plurality of neighboring nodes of the map 10.

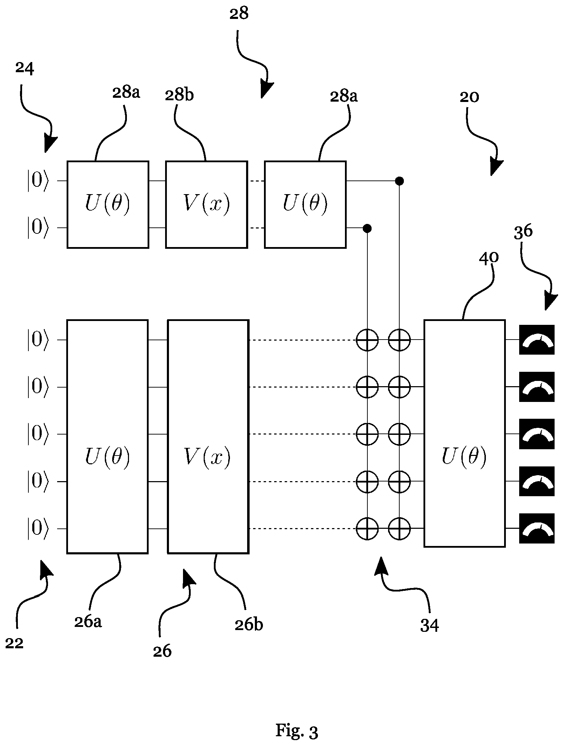

Fig. 3 schematically illustrates another example of a quantum computation system 20. The quantum computation system 20 comprises a first qubit register 22 of first computation qubits and a second qubit register 24 of second computation qubits, which are processed independently by a first variational quantum circuit 26 and a second variational quantum circuit 28, respectively. After the first variational quantum circuit 26 and the second variational quantum circuit 28 have acted on the first computation qubits and the second computation qubits, a coherent interaction circuit 34 may entangle the resulting quantum states of the first computation qubits and the second computation qubits, e.g. based on pair-wise CNOT operations of the first computation qubits and the second computation qubits as shown in Fig. 3. A third variational quantum circuit 40 processes the first computation qubits after the coherent interaction circuit 34 has entangled the states of the first computation qubits with the states of the second computation qubits, and a resulting quantum state may be measured by the measurement portion 36.

Both the first variational quantum circuit 26 and the second variational quantum circuit 28 comprise layers of variational quantum gates 26a, 28a and layers of encoding gates 26b, 28b, indicated as unitaries $U(\theta)$ and $V(x)$, respectively. The unitaries $U(\theta)$ may comprise a plurality of quantum gates, which may rotate the state of the qubits around a given axis by angles θ based on corresponding variational parameters. For example, each of the unitaries U(θ) may comprise single-qubit rotation gates for each of the computation qubits, which may rotate the quantum state of the respective qubit by an associated angle, e.g. $\theta_1$, $\theta_2$, ..., $\theta_n$, for n computation qubits. Each of the angles may be based on a corresponding variational parameter, wherein the variational parameters of each layer 26a, 28a may be different for different layers of variational quantum gates 26a, 28a.

Similarly, the layers of encoding gates 26b, 28b may each comprise a plurality of quantum gates for encoding values of the first and second input feature vectors 30, 32. An action of the encoding gates may be based on a value of the first input feature vector 30 for one of the encoding gates of the first variational quantum circuit 26, and may be based on a value of the second input feature vector 32 for one of the encoding gates of the second variational quantum circuit 28. For example, the current state may be associated with a vector of 30 values, which may be encoded over six layers of encoding gates 26b, 28b, i.e. with each layer of encoding gates 26b, 28b encoding five values of the input feature vector by rotating the quantum states of the five qubits of the first qubit register based on the respective value.

The application of certain layers of encoding gates 26b, 28b may be repeated as part of the first variational quantum circuit 26 and/or the second variational quantum circuit 28, e.g. for reuploading the second feature vector 32 multiple times with multiple layers of encoding gates 28b, which modify quantum states of the second computation qubits according to the same rotations between applications of the layers of variational quantum gates 28a.

The layers of variational quantum gates 26a, 28a and the layers of encoding gates 26b, 28b may act on the states of the computation qubits in alternating fashion, such as to improve an encoding of the features of the input feature vectors 30, 32 in the quantum states of the computation qubits.

As an example, the second input feature vector 32 may comprise the coordinates of the earthquake epicenter 18, and the first input feature vector 30 may comprise information on the current state of the navigation problem, such that the quantum states of the second computation qubits may be affected based on the location of the earthquake 16, and the state of the first computation qubits may be affected based on the locally available navigation information.

The entangled state produced by the coherent interaction circuit 34 may be processed according to the third variational quantum circuit 40, which may affect the quantum state based on corresponding variational parameters, which may again be implemented as a plurality of single qubit rotations based on corresponding angles θ and multi-qubit gates for entangling the qubits. It is noted that the third variational quantum circuit 40 may also comprise multiple layers of variational quantum gates, wherein each layer of variational quantum gates may comprise variational quantum gates which act on the qubits based on associated variational parameters and multi-qubit gates, which induce entanglement between some or all of the computation qubits processed by the third variational quantum circuit 40 (wherein the multi-qubit gates may generally also be associated with a variable action).

The quantum computation circuit may be trained based on a training set of data, wherein the training set of data may comprise a plurality of optimal routes for associated evacuation scenarios, wherein each optimal route may comprise a plurality of decision steps, e.g. based on the selection of an optimal next node.

The variational parameters may be optimized based on a plurality of decision steps, such that the quantum computation system 20 may predict the optimal action predicted by a supervisor algorithm, which created the optimal routes of the training set of data. For example, a gradient of a cost function, attributing a cost to the predicted node by the system 20 with respect to an optimal node, may be determined, e.g. based on a measurement of partial derivatives of the quantum computation system 20, and the variational parameters may be updated to minimize the cost. The variational parameters of the first, second and third variational quantum circuits 26, 28, 40 should be jointly updated, such as to obtain a quantum computation system 20, which efficiently determines the next optimal action.

It was found that the separation of the input features into a first input feature vector 30 and a second input feature vector 32 and their independent processing by the first variational quantum circuit 26 and the second variational quantum circuit 28, respectively, may improve a handling of the perturbation information by the quantum computation system 20 and may improve convergence towards an optimal extremum of the variational parameters, such that the quality of the optimal action can be improved for corresponding multi-step decision problems with dynamically developing conditions and a perturbation, e.g. in the case of the navigation problem on a map in view of an earthquake 16 as a perturbation affecting a plurality of different possible states.

As a result, the quantum computation system 20 may be used in a multi-step decision problem for predicting the next optimal state based substantially on local information on the current state, which may be encoded in the first input feature vector 30, and scenario information on a traffic perturbation, which may be encoded in the second input feature vector 32.

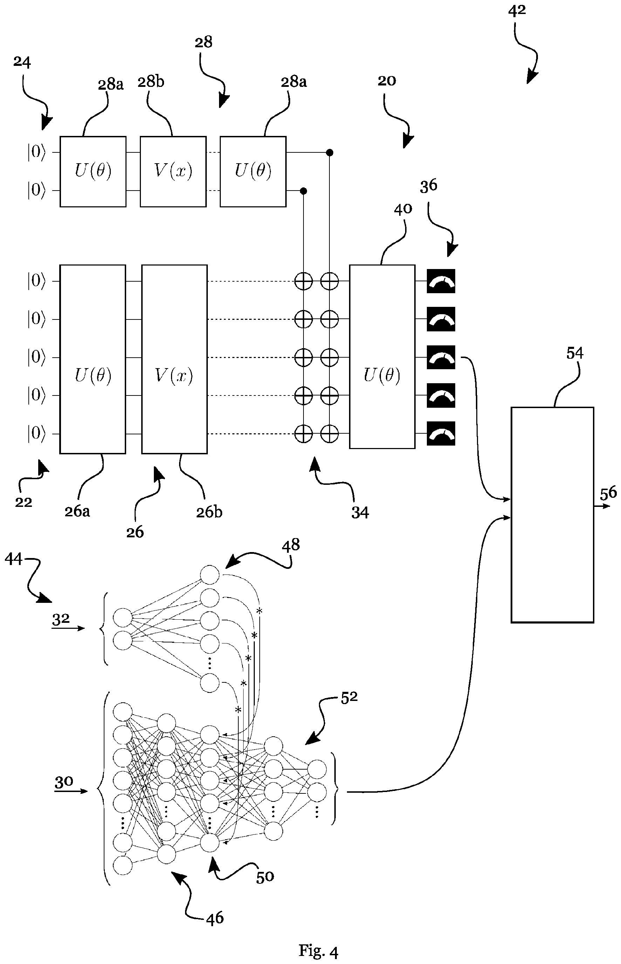

Fig. 4 illustrates an example of a hybrid quantum-classical computation system 42, which combines the quantum computation system 20 illustrated in Fig. 3 with a machine learning model 44 for improving a prediction of the optimal action.

The machine learning model 44 is implemented as a neural network of artificial neurons comprising a first sub-model 46 and a second sub-model 48 for processing the first input feature vector 30 and the second input feature vector 32, respectively. The output feature vector of the second sub-model 48 modifies weights and/or biases of an intermediate layer of artificial neurons 50 of the first sub-model 46, such as to introduce an interaction between features based on the perturbation (encoded as the second input feature vector 32) and features based on the locally available current state information processed by the first sub-model 46. The resulting features are processed by a third sub-model 52, for determining an output feature vector of the machine learning model 44.

The resulting output feature vector of the machine learning model 44 can be concatenated with an output feature vector based on the measured output of the quantum computation system 20 to obtain a concatenated output feature vector. The concatenated output feature vector may subsequently be processed for combining the output features of the machine learning model 44 and the quantum computation system 20 by combination module 54, which may be implemented as a second machine learning model based on another neural network of artificial neurons.

The output 56 of the hybrid quantum-classical computation system 42 may be indicative of the optimal action of a multi-step decision problem based on a corresponding training of the system 42, such as being indicative for the next optimal node for solving a navigation problem, where an agent, e.g. instructing an action of a car, can select a next node/edge at every intermediate step of traversing a graph of nodes interconnected by edges.

It was found by the inventors that the hybrid quantum-classical computation system 42 may generate improved outputs 56 with respect to the individual constituents of the hybrid quantum-classical computation system 42, i.e. the machine learning model 44 or the quantum computation system 20 on their own.

The parameters (e.g. weights and/or biases) of the machine learning model 44 and the second machine learning model 54 and the variational parameters of the quantum computation system 20 may be trained in a joint training algorithm as a joint set of trainable parameters, wherein the algorithm iteratively updates the trainable parameters, such as to optimize a prediction of the optimal action given a current state and scenario information acting as a perturbation to the multi-step decision problem to be solved.

The algorithm may iteratively provide the first and second input feature vectors 30, 32 to the quantum computation system 20 and to the machine learning model 44, and the respective output feature vectors may be provided to the second machine learning model 54. Subsequently, the algorithm may determine a parameter update of the variational parameters and the parameters of the machine-learning models 44, 54 based on a value of a cost function for the optimal action for the input feature vectors 30, 32. The trainable parameters are generally jointly updated in an iterative manner to extremize the cost function associated with the output 56 of the hybrid quantum-classical computation system 42.

Usually, the gradients for a plurality of predicted optimal actions may be determined, and the trainable parameters may be updated based on a plurality of optimal sequences of optimal actions, e.g. based on a plurality of routes. The cost attributed to each optimal action may be based on an optimal solution determined by a supervisor algorithm in a supervised learning approach or may be based on reinforcement learning, e.g. based on a cost attributed to a solution of the navigation problem, e.g. the time required to navigate the map 10 from the starting position 12 to the exit 14, wherein the time may be calculated based on the time required for traversing each edge of the graph when following the predicted sequence.

In the training algorithm, a learning rate for updating the variational parameters and the parameters of the machine-learning model 44 maybe different, such as to adjust a convergence time of the respective models during the training for obtaining a balanced contribution of the quantum computation system 20 and the machine learning model 44 to the solution.

In the following a specific application of the hybrid quantum-classical computation system 42 and a corresponding training process will be described, although the skilled person will appreciate that the individual aspects of the example may be applied to other problems and scenarios.

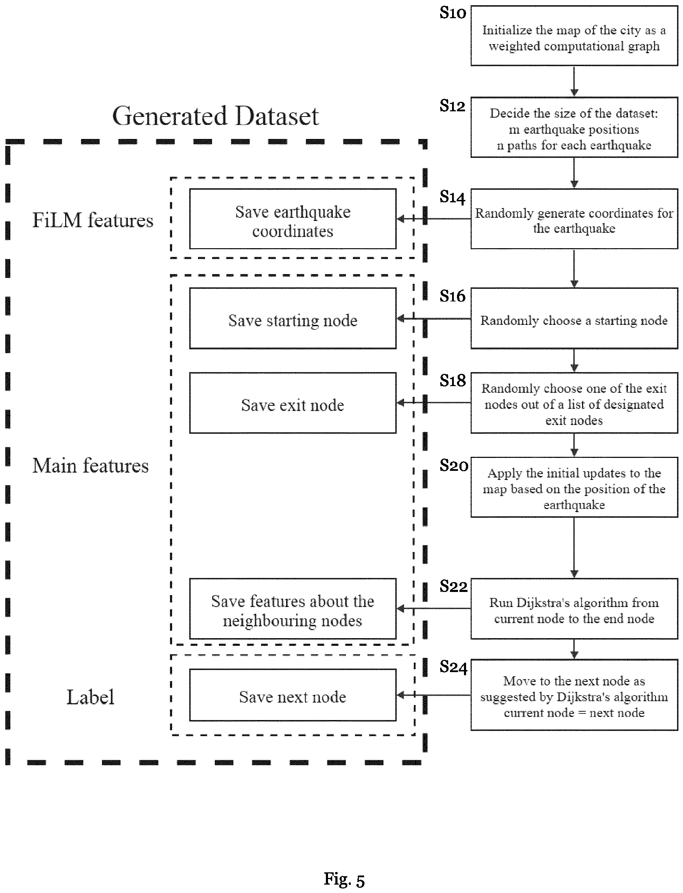

Fig. 5 illustrates an example of a flowchart for a method of generating a training dataset. Method may start with initializing (S10) the map 10 such as a city, as a weighted computational graph, wherein edges of interconnected nodes may be associated with a weight indicative of the traveling time for traversing said edge. The method may be performed for a predetermined size of the data sets, which may be decided based on a number of m earthquake epicenter 18 positions on the map 10 and a number of n paths to be generated for each earthquake scenario (S12). Subsequently, an algorithm may randomly generate coordinates for each of the earthquakes 16, and the coordinates of the earthquake epicenter 18 may be stored as part of the dataset generation (S16). For each of the quakes 16, the algorithm may randomly choose n starting nodes and corresponding exit nodes, which may be selected from a list of designated exits 14 (S16, S18), and the starting and exit nodes may be stored in the dataset.

Subsequently, for each pair of starting and exit nodes, the edges weights of the map 10 may be initialized based on the coordinates of the earthquake epicenter 18 (S20). Then, Dijkstra's algorithm is run from the current node to the designated exit node for determining the optimal next node, and the next node is saved in the dataset as part of the currently generated path between the selected pair of starting and exit nodes (S22). The current node is subsequently updated (S24) according to the predicted optimal next node in the previous step, and the conditions of the map 10 are updated in accordance with a dynamic development of an evacuation/earthquake scenario, and steps S22 and S24 are repeated until the current node equals the exit node generated one of the n paths for the earthquake scenario.

As an illustrative example, the earthquake scenario may be modeled based on an influence of the earthquake 16 around the earthquake epicenter 18 and based on a dynamic influence based on an increase of traffic around the exits 14.

The static impact of the earthquake can be modeled by increasing the edge weights in the beginning of the simulation. After that, the earthquake can have an ongoing dynamic effect, increasing nearby edge weights, while the area of effect can also increase over time. The travel flow near exit nodes may increase the edge weights dynamically while the car moves from node to node.

To simulate these three mechanisms, three active independent models are used simultaneously. The first two models simulate the effect of an earthquake on traveling times between nodes. An earthquake epicenter is considered to have a circular area of effect that increases over time. Its radius is denoted as damage radius which grows over time as $r_{epi}$ = 0.5 + √(0.0002 $t$) with $t$ being the number of traveled nodes to reach the current node. The first model simulates the initial effect and increases the edge weights once, i.e. at time at t=0. The second model covers the ongoing effect of the earthquake and increases the edge weights in the area of effect over time.

For both these models, the increase of the edge weights may depend on the respective Euclidean distance between a given edge and the epicenter coordinates, denoted as $d_{epi}$. The lower this distance, the larger the increase.

In the experiments of the inventors, the update function for each edge weight w for the first model was defined as:

$$ w = \begin{cases} w \times 5 & if\ d_{epi} \leq 0.3\ r_{epi} \\ w \times 2 & if\ 0.3\ r_{epi} \leq d_{epi} \leq 0.75\ r_{epi} \\ w \times 1.3 & f\ 0.75\ r_{epi} \leq d_{epi} \leq r_{epi} \\ w & otherwise, \end{cases} $$

and the second model updated the edge weights as:

$$ w = \begin{cases} min(w \times \sqrt{0.003 \times t + 1}, 5) & if\ d_{epi} \leq 0.3\ r_{epi} \\ min(w \times \sqrt{0.002 \times t + 1}, 4) & if\ 0.3\ r_{epi} \leq d_{epi} \leq 0.75\ r_{epi} \\ min(w \times \sqrt{0.001 \times t + 1}, 3) & f\ 0.75\ r_{epi} \leq d_{epi} \leq r_{epi} \\ w & otherwise. \end{cases} $$

To simulate the traffic flow, the third model was selected to dynamically increase the edge weights near exit nodes while traveling from the starting node to the exit node. As for the earthquake simulation, an exit point has a circular area of effect with radius $r_{exit}$. This radius increases over time. Within the area of effect, all edge weights are increased. Each edge's increase depends on its Euclidean distance to the exit node coordinates, denoted as $d_{exit}$. The lower this distance, the larger the increase. The corresponding update function for each edge weight w is defined as:

$$ w = \begin{cases} min(w \times \sqrt{0.03 \times t + 1}, 5) & if\ d_{exit} \leq 0.3\ r_{exit} \\ min(w \times \sqrt{0.02 \times t + 1}, 4) & if\ 0.3\ r_{exit} \leq d_{exit} \leq 0.75\ r_{exit} \\ min(w \times \sqrt{0.01 \times t + 1}, 3) & f\ 0.75\ r_{exit} \leq d_{exit} \leq r_{exit} \\ w & otherwise. \end{cases} $$

with $r_{exit} = \sqrt{0.00075 \times t}$ and $t$ being the number of traveled nodes to reach the current node.

Thus, after each generation of one datapoint of the dataset, the weights of the nodes may be updated, and the supervisor algorithm may determine a new optimal path based on the map 10 with updated weights from the next node. Multiple earthquake scenarios may be processed in this manner for generating a dataset for training the quantum computation system 20 and/or the hybrid quantum-classical computation system 42. Each earthquake scenario may be associated with a fixed earthquake epicenter 18 location, wherein multiple navigation paths may be generated for the same earthquake epicenter 18 location, e.g. based on different pairs of starting positions 12 and exits 14.

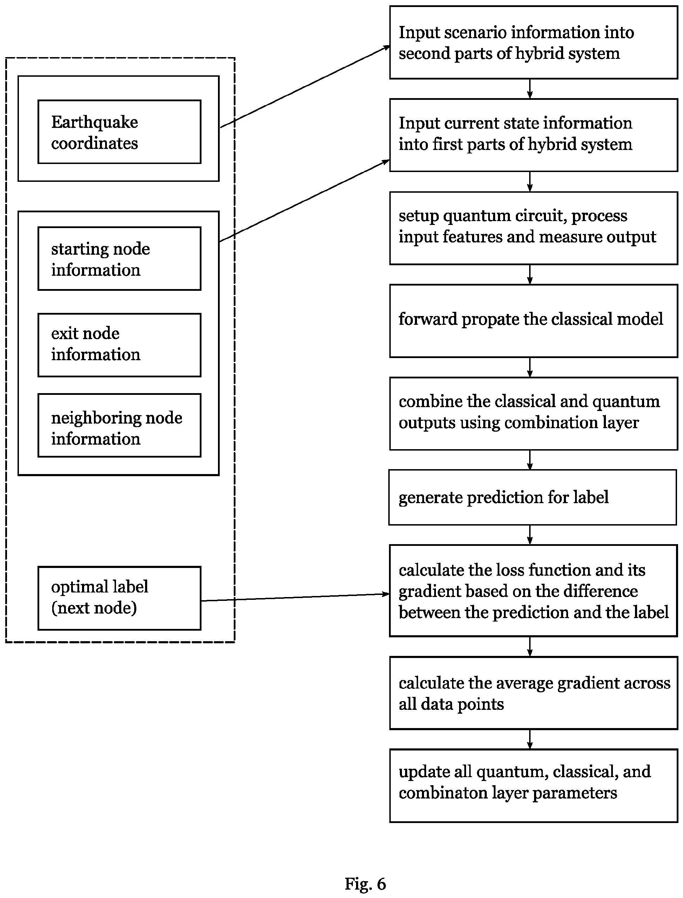

Fig. 6 illustrates an example of a method for training a hybrid quantum-classical computation system 42. In the training algorithm, the earthquake epicenter 18 coordinates are encoded in a second input feature vector 32 for processing by the second parts of the hybrid quantum-classical computation system 42, i.e. the second variational quantum circuit 28 and the second sub-model 48 of the machine learning model 44. Further, current state information is encoded in the first input feature vector 30 processing by the first parts of the hybrid quantum-classical computation system 42, i.e. the first variational quantum circuit 26 and the first sub-model 46 of the machine learning model 44.

Subsequently, the algorithm may set up the quantum circuit 26, 28, 34, 40, to process the first and second input feature vectors 30, 32 and to obtain a corresponding output feature vector 38 from the measurement portion 36. In addition, the algorithm may forward propagate the classical machine learning model 44 for obtaining a corresponding output feature vector, and the output feature vectors of the quantum computation system 20 and the machine learning model 44 may be combined using a combination layer. The combination layer may be a linear combination of the respective output feature vectors based on combination parameters, which attribute a weight to the respective outputs of the quantum computation system 20 and the machine learning model 44, or may be a machine learning model, which may generate an output of the hybrids quantum-classical computation system 42 based on trainable parameters, e.g. weights and biases of an underlying artificial neuron network. Based on the output 56 of the hybrid quantum-classical computation system 42, a prediction for a label may be obtained, which may indicate a prediction for the next nodes out of a plurality of neighboring nodes.

The predicted label and the optimal label in the dataset may be compared and a loss function and its gradient may be calculated based on a difference between the prediction and the stored optimal label.

The preceding steps may be repeated for all data points in the data set, and an average gradient may be calculated across all data points. Based on the calculated gradient, all trainable parameters of the quantum computation system 20 (i.e. the variational parameters), the machine learning model 44 and the combination layer may be updated, e.g. based on an optimization algorithm, for example gradient descent or momentum based gradient descent, such as adaptive moment estimation.

The training algorithm may be repeated until a predetermined number of iterations has been achieved or until a quality of the predicted label meets or exceeds (alternatively, is below) a predetermined quality threshold.

The hybrid quantum-classical computation system 42 was realized based on a quantum computation system 20 realized on a hybrid quantum cloud, wherein the system 42 was trained to navigate a graph of 357 nodes interconnected by 549 edges and representing the city of Furubira, Japan. The minimum and maximum connectivity of the map 10 is two and five. Having minimum connectivity greater than one ensures that the graph is fully connected. Each edge of the graph has a weight proportional to the travel time through the road.

The output 56 of this architecture was five numbers that acted as the logit layer of the node classifier, wherein the quantity of five output numbers was selected based on the maximum connectivity of the map 10 of five in the example. The neighboring node corresponding to the highest number was chosen as the next node. The earthquake epicenter 18 coordinates are encoded as the second input feature vector 28, wherein the x- and y- coordinates are encoded in a first and second qubit of the second qubit register 24, respectively, wherein corresponding encoding gates are applied five times to each of the two "epicenter qubits", and wherein the encoding gates are alternated with layers of variational quantum gates 28a.

In parallel, five (5) first computation qubits in a first qubit register 22 are processed based on the actions of a first variational quantum circuit 26, wherein layers of encoding gates 26b and layers of variational quantum gates 26a are alternatingly applied to the first computation qubits, and wherein the layers of encoding gates 26b encode a first input feature vector based on current state information, wherein different layers of encoding gates 26b encode different sub-vectors of the first input feature vector 30.

In the implementation example, the two "epicenter qubits" are entangled with the current state based section of the quantum computation system 20 using CNOT gates 34 controlled using the two qubits and the NOT applied to all of the first computation qubits. Finally, another variational basic entangler layer 40 was applied to the first computation qubits of the first qubit register 22, and the first computation qubits are measured in the Pauli-Z basis. The outputs of the measurement portion 36 are concatenated with those of the classical machine learning model 44 through a fully-connected layer of artificial neurons.

In addition, the classical machine learning model 44 was trained to predict the next node based on the same data set on its own, and was used as a comparison for the hybrid quantum-classical computation system 42.

The classical machine learning model 44 on its own reaches an average accuracy of 87% of predicting the optimal next node and an arrival rate of 95% at the exit node, showing the capability of mimicking Dijkstra's algorithm used to generate the training dataset. The accuracy may be determined based on the accumulated edge weight difference with respect to the solution by the node-wise Dijkstra algorithm ($path_{Dij}$), e.g. according to $accuracy = |\Sigma_{weight}\, path_{Dij} - \Sigma_{weight}\, path_{model}|/\Sigma_{weight}\, path_{Dij}$.

In addition, the classical model on its own was found to be twice as fast in terms of run time when compared to a node-wise Dijkstra algorithm, which recomputes the optimal path after each step to the next node based on the updated conditions of the evacuation scenario. This run time advantage refers to the time it takes the model to predict the next node compared to Dijkstra's algorithm. The mean runtime for Dijkstra's, with respective variance, is $\mu_{Dij} = 1.3 \times 10^{-3}$s, $\sigma_{Dij} = 4.2 \times 10^{-4}$s while the classical model achieves $\mu_{NN} = 4.9 \times 10^{-4}$s and $\sigma_{NN} = 5.7 \times 10^{-5}$s.

The hybrid quantum computation system 42 was found to significantly improve over the classical machine learning model 44 on its own, achieving an average accuracy of 94%. This means that, on average, the hybrid quantum computation system 42 predicts a path 7% closer to the node-wise Dijkstra's predicted path. Furthermore, the hybrid quantum computation system 42 was found to predict more successful paths than the classical machine learning model 44 on its own and was further found to find more paths that are faster or equal to Dijkstra's algorithm when the entire trajectory is considered.

Thus, the hybrid quantum-classical computation system 42 may improve over classical approaches for a complex multi-step decision problems in view of foreseeable developments in quantum circuit technology. Further, the hybrid quantum -classical computation system 42 may be trained based on a reinforcement learning algorithm, such that the hybrid quantum - classical computation system 42 may further be trained to outperform the supervisor algorithm used in the above examples.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | map |
| 12 | starting position |
| 14 | exit |
| 16 | earthquake |
| 18 | earthquake epicenter |
| 20 | quantum computation system |
| 22 | first qubit register |
| 24 | second qubit register |
| 26 | first variational quantum circuit |
| 28 | second variational quantum circuit |
| 30 | first input feature vector |
| 32 | second input feature vector |
| 34 | coherent interaction circuit |
| 36 | measurement portion |
| 38 | output feature vector of the quantum computation system |
| 40 | third quantum computation circuit |
| 42 | hybrid quantum-classical computation system |
| 44 | machine learning model |
| 46 | first sub-model |
| 48 | second sub-model |
| 50 | intermediate layer of artificial neurons |
| 52 | third sub-model |
| 54 | second machine learning model |
| 56 | output of the hybrid quantum-classical computation system |

**Claims**

1. A quantum computation system (20) for determining an optimal action in a multi-step decision problem based on a current state, the quantum computation system (20) comprising:

   a first qubit register (22) comprising first computation qubits;
   a second qubit register (24) comprising second computation qubits;
   a first variational quantum circuit (26) comprising a plurality of quantum gates acting on the first computation qubits;
   a second variational quantum circuit (28) comprising a plurality of quantum gates acting on the second computation qubits;
   wherein the plurality of quantum gates of the first variational quantum circuit (26) and of the second variational quantum circuit (28) each comprise variational quantum gates (26a, 28a) and encoding gates (26b, 28b) for modifying a state of the first computation qubits and the second computation qubits, respectively;
   wherein parametrized actions of the variational quantum gates (26a, 28a) on the qubits of the qubit register are parametrized according to associated variational parameters;
   wherein the encoding gates (26b, 28b) are configured to encode the first input feature vector (30) and the second input feature vector (32) in the quantum states of the first computation qubits and the second computation qubits, respectively; and

wherein the quantum gates of the second variational quantum circuit (28) do not act on the first computation qubits;

a coherent interaction quantum circuit (34), wherein the coherent interaction quantum circuit (34) comprises a plurality of multi-qubit gates for entangling the quantum states of the first computation qubits and the second computation qubits acted on by the first variational quantum circuit (26) and the second variational quantum circuit (28), respectively; and

a measurement portion (36) for determining an output feature vector (38) indicative of the optimal action by measuring a quantum state of one or both of the first computation qubits and the second computation qubits.

2. The system (20) of claim 1, wherein the first input vector (30) is based on the current state, and wherein the second input vector (32) is based on scenario information valid for a plurality of different states for the multi-step decision problem;

wherein the scenario information is in particular constant or a smooth function over a sequence of steps of the multi-step decision problem.

3. The system (20) of claim 2, wherein the multi-step decision problem is defined on a graph of interconnected nodes, wherein the multi-step decision problem is based on a selection of a next node based on a current node;

wherein the current state in particular includes information on the current node, and wherein the scenario information is independent of the current node; and/or

wherein the current state and/or the scenario information changes based on an elapsed time and/or a number of steps taken to solve the multi-step decision problem.

4. The system (20) of any one of the preceding claims, wherein the multi-step decision problem is a navigation problem, and the optimal action indicates an optimal direction of travel on a map featuring intersections interconnected by edges

wherein the scenario information in particular encodes information on a traffic perturbation, preferably on a spatial origin of the traffic perturbation, and wherein the multi-step decision problem relates to evacuation routing in view of the traffic perturbation.

5. The system (20) of any one of the preceding claims, wherein the quantum computation system (20) comprises a first number of first computation qubits and a second number of second computation qubits, wherein the first number and the second number are different.

6. The system (20) of any one of the preceding claims, wherein the system (20) further comprises a third variational quantum circuit (40), wherein the third variational quantum circuit (40) acts on an output quantum state of the coherent interaction quantum circuit (34).

7. The system (20) of any one of the preceding claims, wherein the variational parameters are trained based on a training algorithm to predict a selected action of a multi-step decision making algorithm based on the current state, wherein the variational parameters in particular are trained based on a navigation algorithm for navigating a graph of nodes, wherein the optimal action is based on a predicted next node for optimally navigating the graph of nodes; and wherein the current state in particular comprises neighboring node information for each neighboring node, wherein the neighboring node information preferably comprises one or more information fields selected from the group of:

current node coordinates,
destination node coordinates,
start node coordinates,
edge weight information indicative of a travelling time between the current node and the neighboring node,
distance information with respect to an Euclidean distance between the neighboring node and the current node,
edge centrality information on the neighboring node, and
cosine norm information based on coordinates of the current node, the neighboring node and a destination node.

8. A hybrid quantum computation system (42) comprising the quantum computation system (20) according to any one of the preceding claims,

wherein the system (42) further comprises a first machine learning model (44) implemented on classical hardware,

wherein the first machine learning model (44) is configured to process the first input feature vector (30) and/or the second input feature vector (32) to obtain an output feature vector (38),

wherein the hybrid quantum computation system (42) further comprises a combination module (54), wherein the combination module (54) is configured to combine the output feature vector (38) of the first machine learning model (44) and an output feature vector (38) of the measurement portion (36) and to determine an output state indicative of the optimal action based on combination parameters,

wherein the variational parameters, the machine-learning parameters, and the combination parameters are obtained based on a common training algorithm, wherein the variational parameter, the machine-learning parameters, and the combination parameters are jointly updated in an iterative manner to improve a prediction of the optimal action.

9. The system (20, 42) of claim 8, wherein the combination module (54) comprises a second machine learning module (54) for combining the output feature vectors (38) of the first machine learning model and the measurement portion (36) of the quantum computation system (20).

10. The system (20, 42) of claim 8 or 9, wherein the first machine learning model (44) comprises a first sub-model (46) and a second sub-model (48, 50) for processing the first feature vector (30) and the second feature vector (32), respectively, and further comprises a feature-wise modulation layer (50), wherein the feature-wise modulation layer (50) acts on an output (56) of the first sub-model (46) and wherein weights and/or biases of the feature-wise modulation layer (50) are modulated based on an output (56) of the second sub-model (48, 50);

wherein the machine learning model (44, 54) in particular further comprises a third sub-model (52) configured to process an output (56) of the feature-wise modulation layer (50).

11. The system (20, 42) of any one of claims 8 to 10, wherein the system (42) is obtained based on a training with training hyperparameters selected to promote a balanced contribution of the first machine learning model (44) and the quantum computation system (20) to the optimal action, in particular based on a training with different learning rates for updating the parameters of the machine learning model (44, 54) and for updating the variational parameters of the quantum computation system (20).

12. A navigating system (20, 42) comprising the system (20, 42) according to any one of the preceding claims.

13. A method for training a system (20, 42) according to any one of the preceding claims for predicting an optimal action in a multi-step decision problem based on a current state, wherein conditions of the multi-step decision problem evolve over time, wherein the method comprises:

determining scenario information and current state information for the multi-step decision problem,
iteratively determining a candidate solution for the multi-step decision problem by:

predicting an optimal step based on a supervisor algorithm,
obtaining a prediction for the optimal step by the system (20, 42); and
updating the current state and the conditions of the multi-step decision problem;

updating the variational parameters of the quantum computation system (20) based on an optimization algorithm, such that the prediction of the optimal step predicted by the system (20, 42) approaches the optimal step predicted by the supervisor algorithm.

14. The method of claim 13, wherein the supervisor algorithm determines the optimal step based on a complete solution of the multi-step problem starting from the current state
wherein the conditions are in particular fixed for determining the complete solution.

15. A computer program comprising machine readable instructions, which when the computer program is executed by a processing unit cause the processing unit to implement a system according to any one of claims 1-12 and/or to implement a method according to claim 13 or 14.

10

14

12

16

16

18

14

Fig. 1

Fig. 2

Fig. 3

Fig. 4

## Generated Dataset

S10 — Initialize the map of the city as a weighted computational graph

S12 — Decide the size of the dataset: m earthquake positions n paths for each earthquake

**FiLM features**

Save earthquake coordinates

S14 — Randomly generate coordinates for the earthquake

**Main features**

Save starting node

S16 — Randomly choose a starting node

Save exit node

S18 — Randomly choose one of the exit nodes out of a list of designated exit nodes

S20 — Apply the initial updates to the map based on the position of the earthquake

Save features about the neighbouring nodes

S22 — Run Dijkstra's algorithm from current node to the end node

**Label**

Save next node

S24 — Move to the next node as suggested by Dijkstra's algorithm current node = next node

Fig. 5

**Fig. 6**

Europäisches
Patentamt

European
Patent Office

Office européen
des brevets

# EUROPEAN SEARCH REPORT

Application Number

EP 23 18 4242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rainjonneau Serge ET AL: "Quantum algorithms applied to satellite mission planning for Earth observation", arXiv.org, 14 February 2023 (2023-02-14), pages 1-13, XP093109858, Ithaca DOI: 10.48550/arxiv.2302.07181 Retrieved from the Internet: URL:https://arxiv.org/pdf/2302.07181v1.pdf [retrieved on 2023-12-07] * abstract; Sections I-IV; figures 6,8,9 * | 1-15 | INV. G06N10/60 G06N3/045 G06N3/084 G06N3/092 ADD. G06N3/006 |
| A | Mo Kordzanganeh ET AL: "Parallel Hybrid Networks: an interplay between quantum and classical neural networks", arXiv.org, 6 March 2023 (2023-03-06), pages 1-8, XP093109855, Ithaca DOI: 10.48550/arxiv.2303.03227 Retrieved from the Internet: URL:https://arxiv.org/pdf/2303.03227v1.pdf [retrieved on 2023-12-07] * abstract; Sections I-IV; figure 1 * | 1-15 | |

-----

-/--

TECHNICAL FIELDS
SEARCHED (IPC)

G06N

The present search report has been drawn up for all claims

| Place of search | Date of completion of the search | Examiner |
|---|---|---|
| The Hague | 8 December 2023 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

Application Number

EP 23 18 4242

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PEREZ ETHAN ET AL: "FiLM: Visual Reasoning with a General Conditioning Layer", PROCEEDINGS OF THE AAAI CONFERENCE ON ARTIFICIAL INTELLIGENCE, [Online] vol. 32, no. 1, 18 December 2017 (2017-12-18), pages 1-13, XP093110386, ISSN: 2159-5399, DOI: 10.1609/aaai.v32i1.11671 Retrieved from the Internet: URL:https://arxiv.org/pdf/1709.07871.pdf> [retrieved on 2023-12-08] * Section 2; figures 2,3 * | 10 | |
| A | Meyer Nico ET AL: "A Survey on Quantum Reinforcement Learning", arXiv (Cornell University), 7 November 2022 (2022-11-07), pages 1-62, XP093109893, Ithaca DOI: 10.48550/arxiv.2211.03464 Retrieved from the Internet: URL:https://arxiv.org/pdf/2211.03464.pdf [retrieved on 2023-12-07] * abstract; Sections 3 and 4; figures 6,7 * | 1-15 | TECHNICAL FIELDS SEARCHED (IPC) |

The present search report has been drawn up for all claims

| Place of search | Date of completion of the search | Examiner |
|---|---|---|
| The Hague | 8 December 2023 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GIACOMO NANNICINI** ; **LEO LIBERTI.** Shortest paths on dynamic graphs. *International Transactions in Operational Research*, 2008, vol. 15 (5), 551-563